# EUROPEAN PATENT APPLICATION

(11) **EP 2 668 856 A1**
(43) Date of publication of application: **04.12.2013**
(21) Application number: 12382214.0
(22) Date of filing: 28.05.2012
(51) Int. Cl.: A23L 1/325, A23B 4/023, A23B 4/28

(54) **Composition, method and use for improving the quality of fish products**

(71) Applicant: Budenheim Altesa, S.L.U., 46540 El Puig (Valencia) (ES)
(72) Inventor: Garcia Tormo, Jose Ramon, 46540 EL PUIG (Valencia) (ES)
(74) Representative: Carpintero Lopez, Francisco

(57) **Abstract**

The present invention relates to a composition for improving the quality and management of the moisture of fish products, and to a method for improving the quality of said products and to the use of said composition. The composition of the present invention comprises glycine and alkaline compounds, such as for example sodium hydroxide, potassium hydroxide, or their salts such as sodium glycinate or potassium glycinate, as well as the mixtures thereof. The composition of the invention is introduced in an initial solution to which the fish product is subjected having a pH in a range comprised between 8.5 and 11, preferably a pH of 10.5.

## Description

### Field of the invention

The present invention relates to the field of food industry, and more specifically to the improvement of the qualities of food products, such as fish products.

### Background of the Invention

In the food industry it is common to subject different food products to various processes for the purpose of improving their organoleptic properties, increasing their shelf life, etc... For example, it is common to subject fish, cephalopods and shellfish to freezing, thawing, salting, desalting, smoking and rehydrating processes. However, during these processes fish products commonly experience unwanted changes, such as for example changes in their tone such as yellowing or discoloration, thereby causing a loss of quality and reduced acceptance by consumers. This color deterioration is the result of oxidation of the fat fraction in the composition.

On the other hand, such processes to which fish products are subjected also sometimes cause a reduction of the weight and water content thereof. When a loss of water occurs, it entails the loss of vitamins, mineral salts and other nutrients from the food, thereby reducing its nutritional value.

Therefore, there is a need to find compositions and methods which allow eliminating or at least reducing the aforementioned drawbacks. In other words, compositions are required that allow improving the quality and properties of fish products after being subjected to the aforementioned common processes. It would also be desirable to obtain compositions which allow reducing the weight and water content loss of fish products after being subjected to said treatment processes.

### Summary of the Invention

In a first aspect, the present invention relates to a composition for improving the quality of fish products comprising glycine and alkaline compounds. The alkaline compounds can be for example sodium hydroxide, potassium hydroxide and mixtures thereof, as well as sodium glycinate, potassium glycinate and mixtures thereof. The composition of the present invention is introduced in an initial solution to which the fish product is subjected during its treatment processes (hydrating, salting, desalting, etc.), said initial solution having a pH in a range comprised between 8.5 and 11, although preferably 10.5.

According to a second aspect, the present invention relates to a method of improving the quality of fish products by applying a composition according to the first aspect of the present invention to said products.

Finally according to a third aspect, the present invention relates to a use of the composition described in the first aspect of the invention, in fish product salting and hydrating or desalting processes.

### Detailed Description of the Preferred Embodiments

As mentioned above, the present invention relates to a composition comprising glycine and alkaline compounds for improving the quality of fish products. In fact, although glycine has been used in other food applications (working as an antacid for example), the present invention describe for the first time the surprising effect of the composition which translates into the improvement of the quality of fish products subjected to various treatment processes since the control and management of the moisture in said products is allowed during their treatment process.

The specific application of the composition of the present invention to fish products will be described herein. In this case, the treatment processes are applied by means of immersing, injecting or vacuum kneading the fish (fillets, loins or shredded fish), shellfish and cephalopods in aqueous solutions or brine.

It has been found within this application for fish (whole fillets, loins, shredded fish...), shellfish and cephalopods that the composition of the present invention provides improvements (as will be seen herein) in the color and organoleptic properties in:
- fish when it is subjected to different types of treatment (injection, immersion and vacuum kneading) for obtaining salted fish (cod, herring, sardines, tuna and other species...), and smoked fish (tuna, salmon, and other species);
- salted fish when it is subjected to the reverse process, i.e., to the desalting process;
- this treatment process can be applied to different forms of fish (such as loins, shredded fish, whole fillets, etc.), as well as to shellfish (shrimp tails, prawn tails), and cephalopods (cuttlefish, squid, octopus).

The composition of the present invention which improves the qualities and management of the moisture of said fish products mainly comprises a fraction of the glycine amino acid and a fraction of at least one alkaline compound. According to a preferred embodiment of the present invention, the fraction of alkaline compounds consists of potassium hydroxide (KOH), sodium hydroxide (NaOH) or a mixture thereof.

For example, in the case of a composition of the present invention comprising glycine and sodium hydroxide, the composition preferably comprises 1-3 parts of glycine (more preferably 2 parts) and 0.5-2 parts of sodium hydroxide (more preferably 1 part). In contrast, in the case of a composition of the present invention comprising glycine and potassium hydroxide, the composition preferably comprises 0.5-2 parts of glycine (more preferably 1 part) and 0.5-2 parts of potassium hydroxide (more preferably 1.3 parts). According to yet another embodiment of the invention, a composition comprising 1 to 2 parts of glycine and 0.5 to 2 parts of a mixture of sodium hydroxide and potassium hydroxide is also provided.

In the aforementioned cases where the composition of the invention comprises glycine together with sodium hydroxide, potassium hydroxide or a mixture thereof, said composition is used in aqueous solution with a concentration of the composition between 10 and 50% w/w based on the total weight of the aqueous solution, preferably a concentration of 20% w/w.

According to another preferred embodiment of the present invention, the composition is presented in the form of a powder mixture comprising glycine and one of the salts NH₂CH₂COONa (sodium glycinate), NH₂CH₂COOK (potassium glycinate) or mixtures thereof. In this case, the composition preferably comprises 0.1 to 10 parts of glycine and 90 to 100 parts of sodium glycinate, potassium glycinate or mixtures thereof, more preferably 5 parts of glycine and 95 parts of sodium glycinate, potassium glycinate or mixtures thereof.

In any of the preceding cases (both a composition in an aqueous solution of glycine together with sodium hydroxide and/or potassium hydroxide, and a composition in the form of glycine powder together with sodium glycinate and/or potassium glycinate) the composition is introduced in an initial solution to which the fish product is going to be subjected. Said initial solution has a pH in a range comprised between 8.5 and 11, more preferably a pH of 10.5. Throughout the treatment of the fish product, this alkaline pH will decrease due to the buffering effect of the fish flesh. The composition of the present invention can be dosed into the processing baths either once (which is optimal when salting fish) or in several doses at different times of the process (which is optimal for elaborating desalted cod, for example).

According to a preferred embodiment of the present invention, in any of the aforementioned composition examples (composition in the form of an aqueous solution and composition in the form of powder), said composition is administered in the initial treatment solution for treating fish products in an amount comprised between 0.1 and 20% v/v, more preferably in an amount of 2% v/v, with respect to said initial solution.

In turn, the ratio of fish products to be treated to water in the treatment solution preferably ranges between 1:1 and 1:7. Said ratio is even more preferably 1:2 (for salting and hydrating processes) and 1:4 (for desalting processes).

Although it has been described that the composition of the present invention comprises glycine together with at least one alkaline compound, persons skilled in the art will readily understand that the composition of the invention is not necessarily limited to said components. In fact, according to alternative embodiments of the invention, the present composition can additionally comprise substances selected from the group consisting of substances improving solubility (for example, citrates), preservatives (for example, lactates, sorbates, benzoates, etc.), colorants, antioxidants, flavoring agents, sugars, salt, carriers and mixtures thereof.

Furthermore, according to a preferred method of the present invention, the application of the composition of the invention to fish products is performed by means of immersing, injecting or vacuum kneading the fish product in solutions having concentrations of the composition of the present invention of 0.1 to 10% with respect to the water or brines used while processing the product.

A series of examples is provided below by way of illustration showing the results obtained by means of applying compositions of the present invention in methods of treating fish products compared with similar treatments of fish products but without using said compositions of the invention.

### Examples

### Example 1: Effect of a mixture of glycine, sodium hydroxide and sodium citrate on cod desalting

A cod desalting process is performed by means of hydrating by immersion following the parameters shown in Table 1 below. The raw material used in the desalting process is dried and salted cod cut into loins. Said desalting treatment was performed with batch 1 following the method of the present invention, and with control batch 2 according to a conventional desalting process. The results obtained with each of the batches are shown in Table 2 below.

**Table 1: Cod desalting treatment**

| Parameters | Batch 1 | Batch 2 |
|---|---|---|
| Formulation | Glycine (0.3%), sodium hydroxide (0.10%), sodium citrate (0.12%) and water (1.43%) | Control |
| Dose | 2% (v/v) | |
| Treatment time | 3 days (initial bath and 2 water changes, adding the formulation composition every day) | |
| H₂O:cod ratio | 4:1 | |
| Draining time | 5 minutes the last day. Remaining draining operations 2 min. | |
| Freezing / thawing | Yes, in IQF | |
| Cooking | They are cooked in water for 20 min. in a closed bag in a water bath until the center of the loin reaches 80°C | |
| Tasting | Yes | |

**Table 2: Results**

| Parameters | Batch 1 | Batch 2 |
|---|---|---|
| Initial weight (g) | 596 | 578.6 |
| Weight after the 1^{st} bath (24 h) | 736 | 692 |
| Weight after the 1^{st} change (48 h) | 788 | 731 |
| Weight after the 2^{nd} change (72 h) | 825 | 738 |
| Yield after the 1^{st} bath (24 h) (%), drained 2 min. | 23.5% | 19.6% |
| Yield after the 1^{st} change (48 h) (%), drained 2 min. | 32.3% | 26.4% |
| Yield after the 2^{nd} change (72 h) (%), drained 5 min. | 38.5% | 27.7% |
| Initial pH 1^{st} bath | 8.76 | 7.84 |
| Final pH 1^{st} bath (24 h) | 8.56 | 6.67 |
| Initial bath pH 1^{st} change | 8.55 | 7.81 |
| Final bath pH 1^{st} change (48 h) | 8.30 | 6.62 |
| Initial bath pH 2^{nd} change | 8.72 | 7.37 |
| Final bath pH 2^{nd} change (72 h) | 8.61 | 6.78 |

As can be seen in the preceding table, the final yield of the method according to the present invention is 38.5%, compared to 27.7% in a conventional desalting process without applying the composition of the present invention.

When analyzing the cod loins, it was observed that whiter cod loins were obtained in batch 1 than in control batch 2, the latter having a yellowish color. In fact, the cod loins of batch 1 treated according to the present invention have very good appearance and quality.

After being cooked, the structure of the flesh of batch 1 remains compact, maintaining its original structure. In the tasting, it is found that the cod of batch 1 is juicier than the cod of control batch 2, no strange smell or flavor being observed.

### Example 2: Elaboration of salted cod with the addition of a glycine, sodium hydroxide and sodium citrate formulation

A liquid composition comprising glycine, sodium hydroxide and sodium citrate was used to determine if the yield improves in elaborating salted cod. The raw material in this example was frozen fresh cod which was thawed and treated by means of immersing in brine.

The parameters used in this example both for batch 1 treated according to a method of the present invention and for control batch 2 are shown in Table 3 below. The results obtained with each of those batches are shown in Table 4 below.

**Table 3: Elaboration of salted cod**

| Parameters | Batch 1 | Batch 2 |
|---|---|---|
| Formulation | Glycine (0.6%), sodium | Control |
| | hydroxide (0.1 %), sodium citrate (0.2%) and water (1.1 %) | |
| Dose in the brine | 2% (v/w) | |
| Brine | 20% w/w of sodium salt (cold H₂O cooled in refrigerator) | |
| Treatment time | 72 hours (until reaching a 20% yield) | |
| Cod:brine ratio | 1:2 (1 kg of fish:2 liters of brine) | |
| Dry salting | With coarse-grained salt until covering. Cod/salt/cod/salt... with surface pressure, in a closed food storage container without holes | |
| Dry salting treatment time | 13 days: at 10 days the water is removed and it is kept for 3 days in food storage containers without holes. After 13 days the salt is removed with a brush. | |

**Table 4: Results**

| Parameters | Batch 1 | Batch 2 |
|---|---|---|
| Initial weight | 546.5 | 499.3 |
| Weight after 72 h in liquid brine | 677.1 | 609.7 |
| Yield (%) after 72 h in liquid brine | +23.9% | +22.1% |
| Weight at 13 days with dry salt | 565.2 | 475.2 |
| Yield (%) at 13 days with dry salt | +3.5% | -4.8% |
| Initial pH | 10.68 | 6.62 |
| pH after 72 h in brine | 8.98 | 6.37 |

As can be seen in the preceding table, the final yield of the method according to the present invention is +3.5%, compared to -4.8% in a conventional salting process without applying the composition of the present invention.

Like in the case of Example 1, the cod loins of batch 1 are whiter than the cod loins of control batch 2, the latter having a yellowish color. In fact, the cod loins of batch 1 treated according to the present invention have very good appearance and quality.

After being cooked, the structure of the flesh of batch 1 remains compact, maintaining its original structure. In the tasting, it is found that the cod of batch 1 is juicier than the cod of control batch 2, no strange smell or flavor being observed.

### Example 3: Effect of a mixture of glycine, sodium hydroxide and potassium hydroxide on cod desalting

A cod desalting process was performed by means of hydrating by immersion following the parameters shown in Table 5 below. Like in Example 1 above, the raw material used in the desalting process is dried and salted cod cut into loins. Said desalting treatment was performed with batch 1 following a method of the present invention, and with control batch 2 according to a conventional desalting process. The results obtained with each of the batches are shown in Table 6 below.

**Table 5: Cod desalting treatment**

| Parameters | Batch 1 | Batch 2 |
|---|---|---|
| Formulation | Glycine (0.3%), sodium hydroxide (0.03%), potassium hydroxide (0.1 %) and water (1.45%) | Control |
| Dose | 2% (v/v) | |
| Treatment time | 3 days (initial bath and 2 water changes, adding the formulation composition every day) | |
| H₂O:cod ratio | 4:1 | |
| Draining time | 5 minutes the last day. Remaining draining operations 2 min. | |
| Freezing / thawing | Yes, in IQF | |
| Cooking | They are cooked in water for 20 min. in a closed bag in a water bath until the center of the loin reaches | |
| | 80°C | |
| Tasting | Yes | |

**Table 6: Results**

| Parameters | Batch 1 | Batch 2 |
|---|---|---|
| Yield after the 1^{st} bath (24 h) (%), drained 2 min. | 21.5% | 18.6% |
| Yield after the 1^{st} change (48 h) (%), drained 2 min. | 30.3% | 24.4% |
| Yield after the 2^{nd} change (72 h) (%), drained 5 min. | 36.1% | 24.7% |
| Initial pH 1^{st} bath | 8.90 | 7.84 |
| Final bath pH 2^{nd} change (72 h) | 8.50 | 6.78 |

As can be seen in the preceding table, the final yield of the method according to the present invention is 36.1%, compared to 24.7% in a conventional desalting process without applying the composition of the present invention.

Like in the preceding cases, it was observed that whiter cod loins were obtained in batch 1 than in control batch 2, the latter having a yellowish color. In fact, the cod loins of batch 1 treated according to the present invention show remarkable appearance and quality.

After being cooked, the structure of the flesh of batch 1 remains compact, maintaining its original structure. In the tasting, it is found that the cod of batch 1 is juicier than the cod of control batch 2, no strange smell or flavor being observed.

### Example 4: Effect of a mixture of glycine and potassium hydroxide on cod desalting

A cod desalting process was performed by means of hydrating by immersion similar to that of Example 3, but using in this case in batch 1 a mixture of glycine and potassium hydroxide. Table 7 below shows the parameters used in this example. Like before, the raw material used in the desalting process is dried and salted cod cut into loins. Said desalting treatment was performed with batch 1 following a method of the present invention, and with control batch 2 according to a conventional desalting process. The results obtained with each of the batches are shown in Table 8 below.

**Table 7: Cod desalting treatment**

| Parameters | Batch 1 | Batch 2 |
|---|---|---|
| Formulation | Glycine (0.3%), potassium hydroxide (0.22%) and water (1.48%) | Control |
| Dose | 2% (v/v) | |
| Treatment time | 3 days (initial bath and 2 water changes, adding the formulation composition every day) | |
| H₂O:cod ratio | 4:1 | |
| Draining time | 5 minutes the last day. Remaining draining operations 2 min. | |
| Freezing / thawing | Yes, in IQF | |
| Cooking | They are cooked in water for 20 min. in a closed bag in a water bath until the center of the loin reaches 80°C | |
| Tasting | Yes | |

**Table 8: Results**

| Parameters | Batch 1 | Batch 2 |
|---|---|---|
| Yield after the 1^{st} bath (24 h) (%), drained 2 min. | 19.5% | 14.6% |
| Yield after the 1^{st} change (48 h) (%), drained 2 min. | 23.3% | 18.4% |
| Yield after the 2^{nd} change (72 h) (%), | 29.1% | 20.7% |
| drained 5 min. | | |
| Initial pH 1^{st} bath | 10.36 | 7.64 |
| Final bath pH 2^{nd} change (72 h) | 10.09 | 6.68 |

As can be seen in the preceding table, the final yield of the method according to the present invention is 29.1%, compared to 20.7% in a conventional desalting process without applying the composition of the present invention.

Like in the preceding cases, it was observed that whiter cod loins were obtained in batch 1 than in control batch 2, the latter showing a yellowish color. In fact, the cod loins of batch 1 treated according to the present invention have very good appearance and quality.

After being cooked, the structure of the flesh of batch 1 remains compact, maintaining its original structure. In the tasting, it is found that the cod of batch 1 is juicier than the cod of control batch 2, no strange smell or flavor being observed.

### Example 5: Elaboration of salted cod with a mixture of glycine and sodium glycinate,

A mixture of glycine with sodium glycinate was used to determine if the yield improves in elaborating salted cod. The raw material in this example was frozen fresh cod which was thawed and treated by means of immersing in brine.

The parameters used in this example both for batch 1 treated according to a method of the present invention and for control batch 2 are shown in Table 9 below. The results obtained with each of those batches are shown in Table 10 below.

**Table 9: Elaboration of salted cod**

| Parameters | Batch 1 | Batch 2 |
|---|---|---|
| Formulation | Glycine (0.09%), Sodium glycinate (1%) | Control |
| Dose in the brine | 1% (v/w) | |
| Brine | 20% w/w of sodium salt (cold H₂O cooled in refrigerator) | |
| Treatment time | 72 hours (until reaching a 20% yield) | |
| Cod:brine ratio | 1:2 (1 kg of fish:2 liters of brine) | |
| Dry salting | With coarse-grained salt until covering. Cod/salt/cod/salt... with surface pressure, in a closed food storage container without holes | |
| Dry salting treatment time | 13 days: at 10 days the water is removed and it is kept for 3 days in food storage containers without holes. After 13 days the salt is removed with a brush. | |

**Table 10: Results**

| Parameters | Batch 1 | Batch 2 |
|---|---|---|
| Yield (%) after 72 h in liquid brine | +24.9% | +21.2% |
| Yield (%) at 13 days with dry salt | +2.5% | -3.8% |
| Initial pH | 10.48 | 6.52 |
| pH after 72 h in brine | 8.68 | 6.27 |

As can be seen in the preceding table, the final yield of the method according to the present invention is +2.5%, compared to -3.8% in a conventional salting process without applying the composition of the present invention.

Like in the preceding cases, the cod loins of batch 1 are whiter than the cod loins of control batch 2, the latter having a yellowish color. In fact, the cod loins of batch 1 treated according to the present invention have very good appearance and quality.

After being cooked, the structure of the flesh of batch 1 remains compact, maintaining its original structure. In the tasting, it is found that the cod of batch 1 is juicier than the cod of control batch 2, no strange smell or flavor being observed.

### Example 6: Effect of a mixture of glycine, sodium hydroxide and sodium citrate in the treatment of shrimp tails

A liquid composition comprising glycine, sodium hydroxide and sodium citrate was used to determine if the treatment of shrimp tails improves. The raw material in this example was frozen whole prawn which was thawed, peeled and treated by means of immersing in brine.

The parameters used in this example both for batch 1 treated according to a method of the present invention and for control batch 2 are shown in Table 11 below. The results obtained with each of those batches are shown in Table 12 below.

**Table 11: Treatment of shrimp tails**

| Parameters | Batch 1 | Batch 2 |
|---|---|---|
| Formulation | Glycine (0.3%), sodium hydroxide (0.15%), sodium citrate (0.12%) and water (1.43%) | Control |
| Dose | 2% (v/v) | |
| Salt | 2.5% | |
| Treatment time | 3 hours | |
| H₂O:shrimp tails ratio | 1:1.5 | |
| Draining time | 10 minutes | |
| Freezing / thawing | Yes, in IQF | |
| Cooking | The shrimp tails are cooked in 4 baskets at the same time of approx. 250 initial grams of shrimp tails in each, introducing them in water at 98°C until their inside reaches 75°C | |
| Freezing / thawing | No | |
| Cooling | H₂O:ice approx.. 400:300 for 300 g of shrimp tails | |
| Tasting | Yes | |

**Table 12: Results**

| Parameters | Batch 1 | Batch 2 |
|---|---|---|
| Yield (%) after cooking and cooling | +1.5% | -6.3% |
| Initial pH | 10.9 | 7.5 |
| Final pH | 9.33 | 7.1 |

As can be seen in the preceding table, the final yield of the method according to the present invention is +1.5% compared to -6.3% of a conventional process without applying the composition of the present invention.

In the tasting it was observed that both the juiciness and the texture of the cooked shrimp of batch 1 were better compared with the shrimp tails of the control batch. In fact, the shrimp tails of batch 1 treated according to the present invention have very good appearance and quality.

As shown in the preceding examples, it is observed that the use of a composition comprising glycine and alkaline compounds improves the yield obtained while processing salted and desalted cod. Furthermore, it is also observed that the use of the compositions of the present invention improves the organoleptic properties of the fish products (such as color, flavor, texture, etc.) with respect to fish products treated in a conventional manner.

It can therefore be observed that the use of a composition comprising glycine and alkaline salts both of sodium and of potassium in fish products allows substantially improving the organoleptic properties thereof. Said compositions can be prepared and applied both in the form of powder and in the form of aqueous solutions at different concentrations. In the studies conducted that are herein described above, an improvement in the texture, tone, color, appearance and juiciness of fish products is observed due to the effect that the glycine and alkaline salts have on the fish product water retention and stabilizing capacity.

## Claims

1. Composition for improving the quality of fish products comprising glycine and one or more alkaline compounds which is dispersed in the initial solution in which the food product is going to be treated when the food product is going to be treated, said solution having a pH in a range comprised between 8.5 and 11.

2. Composition according to claim 1, **characterized in that** it comprises glycine and an alkaline compound selected from potassium hydroxide, sodium hydroxide or mixtures thereof.

3. Composition according to claim 2, **characterized in that** it comprises 1 to 3 parts of glycine and 0.5 to 2 parts of sodium hydroxide.

4. Composition according to claim 2, **characterized in that** it comprises 0.5 to 2 parts of glycine and 0.5 to 2 parts of potassium hydroxide.

5. Composition according to claim 2, **characterized in that** it comprises 1 to 2 parts of glycine and 0.5 to 2 parts of a mixture of sodium hydroxide and potassium hydroxide.

6. Composition according to any of the preceding claims, **characterized in that** it is used in the form of an aqueous solution with a concentration of the composition between 10 and 50% w/w based on the total weight of the aqueous solution of the composition.

7. Composition according to claim 6, **characterized in that** the concentration of the composition in the aqueous solution is 20% w/w.

8. Composition according to any of claims 1 to 2, **characterized in that** it is presented in the form of a powder mixture and comprises glycine and one of its salts of sodium glycinate, potassium glycinate or mixtures thereof.

9. Composition according to claim 8, **characterized in that** it comprises 0.1 to 10 parts of glycine and 90 to 100 parts of sodium glycinate, potassium glycinate or mixtures thereof.

10. Composition according to any of the preceding claims, **characterized in that** it additionally comprises substances selected from the group consisting of substances improving solubility, preservatives, colorants, antioxidants, flavoring agents, sugars, salt, carriers and mixtures thereof.

11. Composition according to any of the preceding claims, **characterized in that** it is administered in the treatment of fish products in an amount of 0.1-20% v/v with respect to the initial solution to which the fish product is subjected.

12. Composition according to claim 11, **characterized in that** the amount of composition administered with respect to the initial solution to which the fish product is subjected is 2% v/v.

13. Method of improving the quality of fish products, **characterized in that** a composition according to any of claims 1-12 is applied on the product to be treated.

14. Method according to claim 13, **characterized in that** it is performed by means of immersing, injecting or vacuum kneading the fish product in solutions having concentrations of the composition of 0.1 to 10% with respect to the water or brines used while processing the product.

15. Use of a composition according to any of claims 1-12 during the process of salting and hydrating fish products.

16. Use according to claim 15 in the fish product salting and hydrating process, **characterized in that** the fish product to water ratio ranges between 1:1 and 1:7.

17. Use according to claim 16, **characterized in that** the fish product to water ratio is 1:2.

18. Use of a composition according to any of claims 1-12 in the fish product desalting process.

19. Use according to claim 18 in the fish product desalting process, **characterized in that** the fish product to water ratio ranges between 1:1 and 1:7

20. Use according to claim 19, **characterized in that** the fish product to water ratio is 1:4.
